# EUROPÄISCHE PATENTANMELDUNG

(11) **EP 1 264 737 A1**
(43) Veröffentlichungstag der Anmeldung: **11.12.2002**
(21) Anmeldenummer: 02006256.8
(22) Anmeldetag: 20.03.2002
(51) Int. Cl.: B60R 16/02

(54) **System zur Übertragung von Signalen innerhalb eines Fahrzeugs**

(30) Priorität: 08.06.2001 DE 10128045
(71) Anmelder: Valeo Schalter und Sensoren GmbH, 74321 Bietigheim-Bissingen (DE)
(72) Erfinder: Poslowsky, Georg, 74348 Lauffen a.N. (DE)
(74) Vertreter: Dreiss, Fuhlendorf, Steimle & Becker

(57) **Zusammenfassung**

Die Erfindung ein System zur Übertragung von Signalen innerhalb eines Fahrzeuges, das eine kabellose Funkverbindung umfasst.

## Beschreibung

Die Erfindung betrifft ein System zur Übertragung von Signalen innerhalb eines Fahrzeuges, insbesondere eines Kraftfahrzeuges. Zunehmend werden Fahrzeuge mit CAN-Bus-Systemen ausgestattet, über die ein Informationsaustausch zwischen verschiedenen Bauteilen, wie beispielsweise Mechatronikmodulen, möglich ist.

Nachteil dieses Standes der Technik ist, dass die einzelnen Module mittels elektrischer Leitungen miteinander zu verbinden sind. Insbesondere bei fern voneinander angeordneten Bauteilen sind demnach entsprechend lange Leitungen vorzusehen.

Aufgabe der vorliegenden Erfindung ist deshalb, ein System zur Übertragung von Signalen innerhalb eines Fahrzeuges bereitzustellen, bei welchem der Leitungsaufwand verringert wird.

Diese Aufgabe wird bei einem System gelöst, welches zur Übertragung von Signalen innerhalb eines Fahrzeuges eine kabellose Funkverbindung umfasst.

Dies hat den Vorteil, dass der Verkabelungsaufwand innerhalb des Fahrzeuges reduziert wird. Weiterhin erfolgt eine Gewichtsreduzierung aufgrund des wegfallenden Verkabelungsaufwandes. Aufgrund des geringeren Verkabelungsaufwandes ist auch die Nachrüstbarkeit und Austauschbarkeit von einzelnen Elektronik- oder Mechatronikmodulen auf einfache Art und Weise möglich.

Vorzugsweise basiert die Funkverbindung auf dem Bluetooth-Standard. Der Bluetooth-Standard eignet sich insbesondere zur Übertragung von Signalen über eine kurze Distanz.

Eine weitere Ausführungsform der Erfindung sieht vor, dass die Übertragung zwischen Mechatronikmodulen des Fahrzeugs erfolgt. Derartige Module weisen bereits entsprechende Elektronikbauteile auf, die ohne größeren Aufwand mit entsprechenden Funksendern bzw. Empfängern gekoppelt werden können.

Außerdem ist erfindungsgemäß denkbar, dass die Übertragung zwischen Lenkradtasten und einer Auswerteeinheit des Fahrzeuges erfolgt. Dies hat den Vorteil, dass Verkabelungsaufwand zwischen dem verdrehbaren Lenkrad und der ortsfest angeordneten Auswerteeinheit eingespart werden kann.

Weiterhin ist denkbar, dass die Übertragung zwischen Tasten und Stellmotoren des Fahrzeuges erfolgt. Insbesondere können beispielsweise über Wischerschalter die Wischermotoren des Fahrzeuges betätigt werden. Insbesondere bei Verwendung der Erfindung für einen Heckwischer kann ein nicht unbeachtlicher Leitungsaufwand eingespart werden.

Außerdem kann erfindungsgemäß vorgesehen sein, dass die Übertragung zwischen Sensoren und Regel- und/oder Steuereinheiten des Fahrzeugs erfolgt. Derartige Sensoren können beispielsweise Lenkwinkelsensoren oder Motordrehzahlsensoren sein. Aufgrund der Erfindung entfallen Leitungen zu schlecht oder nur mit sehr großem Aufwand zugänglichen Sensoren.

Bei einer weiteren Ausführungsform der Erfindung erfolgt die Übertragung zwischen Parkhilfesensoren und einer zugehörigen Auswerteeinheit innerhalb des Fahrzeuges. Auch hier entfällt Leitungsaufwand zwischen den Parkhilfesensoren, die regelmäßig an der Außenoberfläche des Fahrzeuges angeordnet sind und der Auswerteeinheit, die sich innerhalb des Fahrzeuges befindet.

Die eingangs genannte Aufgabe wird außerdem durch ein Fahrzeug gelöst, das ein im Vorhergehenden beschriebenes System aufweist.

Alle in der Beschreibung und den nachfolgenden Ansprüchen beschriebenen Merkmale können sowohl einzeln als auch in beliebiger Kombination miteinander erfindungswesentlich sein.

## Patentansprüche

1. System zur Übertragung von Signalen innerhalb eines Fahrzeuges, **dadurch gekennzeichnet, dass** das System eine kabellose Funkverbindung umfasst.

2. System nach Anspruch 1, **dadurch gekennzeichnet, dass** die Funkverbindung auf dem Bluetooth-Standard basiert.

3. System nach Anspruch 1 oder 2, **dadurch gekennzeichnet, dass** die Übertragung zwischen Mechatronikmodulen des Fahrzeuges erfolgt.

4. System nach Anspruch 1, 2 oder 3, **dadurch gekennzeichnet, dass** die Übertragung zwischen Lenkradtasten und einer Auswerteeinheit des Fahrzeuges erfolgt.

5. System nach einem der vorhergehenden Ansprüche, **dadurch gekennzeichnet, dass** die Übertragung zwischen Tasten und Stellmotoren des Fahrzeuges erfolgt.

6. System nach einem der vorhergehenden Ansprüche, **dadurch gekennzeichnet, dass** die Übertragung zwischen Wischerschalter und Wischermotoren erfolgt.

7. System nach einem der vorhergehenden Ansprüche, **dadurch gekennzeichnet, dass** die Übertragung zwischen Sensoren und Regel- und/oder Steuereinheiten des Fahrzeuges erfolgt.

8. System nach einem der vorhergehenden Ansprüche, **dadurch gekennzeichnet, dass** die Übertragung zwischen Parkhilfesensoren und einer Auswerteeinheit erfolgt.

9. Fahrzeug, insbesondere Kraftfahrzeug, mit einem System nach einem der vorhergehenden Ansprüche.
